# EUROPÄISCHE PATENTSCHRIFT

(11) **EP 1 752 197 B1**
(45) Veröffentlichungstag und Bekanntmachung des Hinweises auf die Patenterteilung: **22.09.2010**
(21) Anmeldenummer: 06117882.8
(22) Anmeldetag: 26.07.2006
(51) Int. Cl.: A63B 29/02

(54) **Lawinensonde**
Avalanche probe
Sonde d'avalanche

(30) Priorität: 08.08.2005 DE 102005037390
(43) Veröffentlichungstag der Anmeldung: 14.02.2007
(73) Patentinhaber: Kampel, Gerald, 82024 Taufkirchen (DE)
(72) Erfinder: Poulheim, André, 50939, Köln (DE); Frackenpohl, Thorsten, 50670, Köln (DE)
(74) Vertreter: Bohnenberger, Johannes

(56) Entgegenhaltungen:
- DE-U1- 20 209 833
- FR-A- 2 584 933
- FR-A1- 2 583 986
- US-A- 5 966 992

## Beschreibung

Die vorliegende Erfindung betrifft eine Lawinensonde zum Sondieren nach Lawinenverschütteten nach dem Oberbegriff des Anspruchs 1.

Zerlegbare Lawinensonden sind unter anderem aus der Druckschrift DE 37 29 058 A1 bekannt. Sie werden nach einem Lawinenabgang, bei dem es zu einer Verschüttung von Personen gekommen ist, zum Sondieren des relevanten Geländes eingesetzt. Mittels der Lawinensonden lässt sich vor allem bei der Suche im Nahbereich ein Lawinenopfer punktgenau orten. Beim Bergen des Lawinenopfers mittels einer Lawinenschaufel kann so ein kraftraubendes und zeitaufwendiges Abtragen von Schneemassen vermieden werden, da man die genaue Position des Verschütteten bereits bestimmt hat.

Zerlegbare Lawinensonden, die meistens aus einer Vielzahl von rohrförmigen Sondenteilen bestehen, die sich bei Bedarf zusammensetzen lassen, haben den Vorteil, dass sie sich bei einer Nichtverwendung auf ein sehr kompaktes Packmaß reduzieren lassen. Dies ist besonders vorteilhaft für Wintersportler, die die Lawinensonde nur für den Notfall, der hoffentlich nie eintritt, bei sich tragen, da sich die ansonsten sperrige Lawinensonde so leicht verstauen lässt.

Die aus mehreren rohrförmigen Sondenteilen bestehenden Lawinensonden werden meist von einem Verbindungsseil durchzogen. Das Verbindungsseil ist meist an der Spitze der Lawinensonde befestigt und lässt sich mittels einer Spannvorrichtung am der Spitze gegenüberliegenden Ende der Sonde spannen, so dass sich die einzelnen Sondenteile aneinander reihen. Für zusätzliche Stabilität sorgen Steckverbindungen zwischen benachbarten Sondenteilen. Um das dauerhafte Zusammenhalten der Sondenteile, auch beim Sondieren im Schnee, zu gewährleisten, ist es nötig, das gespannte Verbindungsteil zu fixieren. Bei herkömmlichen Sonden ist hierfür am letzten Sondenteil (das von der Sondenspitze am weitesten abgewandten)eine Zugstange mit einem Gewinde vorgesehen. Im zusammengefalteten Zustand der Lawinensonde befindet sich diese Zugstange innerhalb des letzten Sondenteil und ragt mit einem Ende nur wenig über das letzte Sondenteil heraus. Am anderen Ende der Zugstange ist das Verbindungsseil angebracht. Durch ein Herausziehen der Stange wird das Verbindungsseil gespannt. Die Stange ist so bemessen, dass ein Gewinde an der Stange genau dann in eine dafür vorgesehene Mutter am letzten Sondenteil eingreift, wenn das Verbindungsseil ausreichend gespannt ist und die Sondenteile zusammenhält. Durch eine Rotationsbewegung der Zugstange um die eigene Achse lässt sich deren Gewinde in die Mutter einschrauben und somit das Verbindungsseil im gespannten Zustand fixieren.

Diese Vorrichtung weist mehrere Nachteile auf. Zum einen ist das Gewinde sowie die über das letzte Sondenteil herausragende Zugstange einem starken Verschleiß unterworfen. Die Stange kann sich verbiegen und das Auf- und Abbauen der Sonde erschweren. Ebenso kann das Gewinde sowohl der Mutter als auch der Zugstange auf Grund von Korrosion oder anderen mechanischen Einwirkungen zu Schaden kommen. Ebenso kommt es häufig vor, dass unter den extremen Bedingungen von Eis und Schnee das Gewinde seine Funktion verweigert. Das Einschrauben der Zugstange in die Mutter kann bei großer Kälte mit durch Handschuhen geschützten, klammen Händen schwierig sein.

Ausgehend von diesem Stand der Technik ist es Aufgabe der vorliegenden Erfindung, eine Lawinensonde bereitzustellen, die sich einfach, sicher und verschleißfrei zusammenbauen, benutzen sowie zerlegen lässt.

Diese Aufgabe wird bei einer Lawinensonde, umfassend mindestens ein erstes und ein zweites rohrförmiges Sondenteil, die in Steckverbindung bringbar sind, ein im Inneren der Sondenteile angeordnetes Verbindungsseil, dessen eines Ende mit dem ersten Sondenteil und dessen anderes Ende mit einer Spannvorrichtung in Verbindung steht, wobei das Verbindungsseil mittels der Spannvorrichtung spannbar und in einer am zweiten Sondenteil angeordneten Klemmvorrichtung so fixierbar ist, dass in einem gespannten Zustand alle Sondenteile steckverbunden aneinander gehalten werden, und in einem ungespannten Zustand die Sondenteile gegeneinander bewegbar sind, dadurch gelöst, dass die Klemmvorrichtung eine Innenhülse mit einem ersten Kanal und eine Außenhülse mit einem zweiten Kanal umfasst, in dem die Innenhülse derart entlang einer Längeachse der Außenhülse verschiebbar angeordnet ist, dass die Innenhülse aus einer Freigabeposition in eine Klemmposition bringbar ist, in der mindestens ein Klemmelement so in den ersten Kanal eingreift, dass das in dem ersten Kanal verlaufende Verbindungsseil fixierend in der Klemmvorrichtung gehalten wird.

Der Vorteil der Vorrichtung liegt also insbesondere darin, dass die Klemmvorrichtung zum Fixieren des Verbindungsseils im Wesentlichen aus drei Elementen, nämlich der Innenhülse, dem Klemmelement und der Außenhülse, besteht. Das im Inneren der Sonde verlaufende Verbindungsseil ist durch die Innenhülse geführt. Die Innenhülse lässt sich entlang der Längsachse der Außenhülse hin und her verschieben. Befindet sich die Innenhülse in der Klemmposition, so greift durch die Wand der Innenhülse ein Klemmelement in den zweiten Kanal ein und fixiert so das Verbindungsseil.

Vorteilhaft ist hierbei besonders, dass eine einfache Schiebebewegung aus der Freigabeposition in die Klemmposition ausreicht, um das Verbindungsseil zu fixieren. Wirkt die Spannkraft des Verbindungsseils so, dass bei entsprechender Reibung die Innenhülse automatisch in die Klemmposition gebracht wird, kann die Klemmvorrichtung ohne weiteres Zutun das gespannte Verbindungsseil fixieren.

Vorzugsweise umfasst die Innenhülse mindestens eine Ausnehmung, die den ersten mit dem zweiten Kanal verbindet und jeweils ein Klemmelement aufnimmt. Diese Ausnehmung kann beispielsweise eine Bohrung sein, die im rechten Winkel zu der Längsachse des zweiten Kanals durch die Wand der Innenhülse angebracht wurde. Somit kann die relative Bewegung zwischen der Innenhülse und Außenhülse, die bei einem Verschieben von der Freigabeposition in die Klemmposition entsteht, genutzt werden, um über die Ausnehmung das Klemmelement in Richtung auf das Verbindungsseil umgelenkt zu werden und die fixierende Wirkung auf das Verbindungsseil auszuüben.

Vorzugsweise umfasst die Innenhülse genau drei einander gegenüberliegende Klemmelemente. Die drei Klemmelemente sind auf einer Ebene orthogonal zur Längsachse des zweiten Kanals angeordnet und bilden vorzugsweise jeweils paarweise mit dem Mittelpunkt des zweiten Kanals im Wesentlichen gleich große Winkel aus. Ein so verspanntes Seil wird sicher gehalten und lässt sich auch leicht aus der verspannten Position lösen, da jedes der drei Klemmelemente eine gleichmäßige Kraft ausübt.

Bei der Fertigung von Lawinensonden ist es günstig und vorteilhaft, die einzelnen Elemente aus nicht rostendem Material zu fertigen. Bevorzugt werden die Klemmelemente aus Kunststoff hergestellt.

Vorzugsweise umfasst das Klemmelement eine Kugel. Diese Kugel, die in der oben angesprochenen Ausnehmung angeordnet ist, gleitet bei einer Verschiebung der Innenhülse aus der Klemmposition in die Freigabeposition und wieder zurück ohne große Reibung entlang der Innenwand der Außenhülse. Bei dieser Bewegung ist also aufgrund der geringen Reibung nur ein geringer Kraftaufwand erforderlich.

Vorzugsweise ist der Durchmesser der Kugel größer als die Wandstärke der Innenhülse in unmittelbare Umgebung der jeweiligen Ausnehmung, so dass die Kugel zwischen der Außenhülse und dem Verbindungsseil einklemmbar ist. Das bedeutet, dass die Kugel so groß dimensioniert ist, dass sie entweder in den ersten oder in den zweiten oder teilweise in beide Kanäle hineinragt. Somit lässt sich über die Kugel Kraft auf das im zweiten Kanal verlaufende Verbindungsseil ausüben. Diese Kraft dient zum Fixieren.

Bevorzugt ist der Durchmesser der Kugel größer oder gleich dem des Verbindungsseils. Bevorzugte Dimensionen des Verbindungsseils sind bei einem Metallkabel ca. 1,6 mm und bei einem Kevlarkabel ca. 2 mm. Entsprechend weisen die Kugeln einen Durchmesser von ca. 2,5 mm bis zu 3,0 mm auf. Durch das Verwenden von günstigen Relationen zwischen Seil- und Kugeldurchmesser kann ein sicheres Halten besonders bei der Verwendung von drei Kugeln, die in einer Ebene einander gegenüberliegend angeordnet sind, gewährleistet werden.

Vorzugsweise umfasst eine Innenwand der Außenhülse mindestens einen sich in Richtung auf das erste Sondenteil konisch verjüngenden Abschnitt, der in axialer Richtung des zweiten Kanals eine Rampe bildet, die beim Bewegen der Innenhülse von der Freigabeposition in die Klemmposition mindestens ein Klemmelement in Richtung des Verbindungsseils verspannt. Bei dieser Bewegung der Innenhülse gleitet also mindestens ein Klemmelement z.B. die in der Ausnehmung gehaltene Kugel die Rampe hinauf und wird somit zunehmend in Richtung des zweiten Kanals gedrückt. Der so bewerkstelligte Fixierungsvorgang kann durch eine Bewegung der Innenhülse aus der Klemmposition in die Freigabeposition umgekehrt werden. Die Kugel bzw. das Klemmelement gewinnt so zunehmend an Spiel und fixiert das Seil nicht mehr.

Vorteilhafterweise umfasst eine Außenwand der Innenhülse mindestens einen konischen Abschnitt, der im Wesentlichen parallel zum konischen Abschnitt der Außenhülse ausgebildet ist und in welchem mindestens ein Klemmelement angeordnet ist. In der Klemmposition liegt also jeweils ein konischer Abschnitt der Außenhülse einem konischen Abschnitt der Innenhülse gegenüber.

Um zu vermeiden, dass die Klemmvorrichtung ihre Funktionalität aufgrund von Verschmutzung oder Vereisung verliert, hat sie mindestens eine Dichtung, welche den ersten und den zweiten Kanal gegen die Außenumgebung abdichtet. Vorzugsweise sind mehrere Dichtungen so angeordnet, dass weder durch die relative Bewegung des Verbindungsseils noch durch die Bewegung der Innenhülse zur Außenhülse (aus der Klemmposition in die Freigabeposition und zurück) ein Transportieren von Schmutz oder Feuchtigkeit ins Innere der Klemmvorrichtung möglich ist.

Spannt ein Federelement der Klemmvorrichtung die Innenhülse in der Klemmposition vor, so kommt es zu einem automatischen Fixieren des Verspannungsseils. Wird das Verspannungsseil stärker gespannt, so wirkt vorzugsweise die Spannbewegung entgegen der Federkraft und bringt die Innenhülse aus der Klemmposition in die Freigabeposition. Nach dem Spannen des Verbindungsseils kehrt die Innenhülse getrieben von dem Federelement in die Klemmposition zurück.

Bevorzugt handelt es sich bei dem Federelement um eine Schrauben- oder Kegelfeder.

Zum einfachen Auflösen der Fixierung des Verbindungsseils kann ein Auslösegriff am äußeren dem zweiten Sondenteil abgewandten Ende der Innenhülse vorgesehen werden, mittels dessen die Innenhülse aus der Klemmposition in die Freigabeposition bringbar ist.

Zur leichteren Bedienbarkeit des Auslösegriffs kann an dem zweiten Sondenteil ein Haltegriff vorgesehen werden. Dies ist besonders vorteilhaft, wenn man bedenkt, dass die Sonden in Schnee und Eis verwendet werden und somit die Benutzer meistens Handschuhe tragen.

Bevorzugt umfasst die Außenhülse eine Stoppvorrichtung, die eine Bewegung der Innenhülse zumindest im gespannten Zustand entgegen der Spannwirkung des Verbindungsseils begrenzt. Eine derartige Stoppvorrichtung ist so ausgeprägt, dass einem Verklemmen oder Verkeilen der Innenhülse im ersten Kanal insbesondere aufgrund der konischen Verjüngung der Außenhülse vorgebeugt wird, um die Bewegung der Innenhülse möglichst leichtgängig zu gestalten.

Bevorzugt umfasst die Innenhülse mindestens eine Aussparung zur fixierenden Aufnahme des Verbindungsseils in der Klemmposition.

Um eine leichte Wartung der Klemmvorrichtung zu gewährleisten, kann an dem zweiten Sondenteil ein Adapter vorgesehen werden, in den die Klemmvorrichtung lösbar eingeschraubt werden kann. Dieser Adapter kann beispielsweise mit dem zweiten Sondenteil verklebt werden. Statt eines Einschraubens der Klemmvorrichtung in dem Adapter oder auch direkt in das Sondenteil ist auch ein Schnappmechanismus zur Sicherung der Klemmvorrichtung in dem Adapter denkbar.

Weitere Einzelheiten, Vorteile und Weiterbildungen der Erfindung ergeben sich aus der folgenden Beschreibung zweier bevorzugter Ausführungsformen unter Bezugnahme auf die Zeichnungen.

Es zeigen:
- Fig. 1: eine Lawinensonde mit einer Klemmvorrichtung;
- Fig. 2a: eine Explosionsansicht einer ersten Ausführungsform der Klemmvorrichtung aus Fig. 1;
- Fig.2b: eine Explosionsansicht einer zweiten Ausführungsform der Klemmvorrichtung aus Fig. 1;
- Fig. 3a: einen Querschnitt durch die Klemmvorrichtung aus Fig. 2a; und
- Fig.3b: einen Querschnitt der Klemmvorrichtung aus Fig. 2b.

In den Abbildungen werden für gleiche und gleichwirkende Teile die selben Bezugsziffern verwendet.

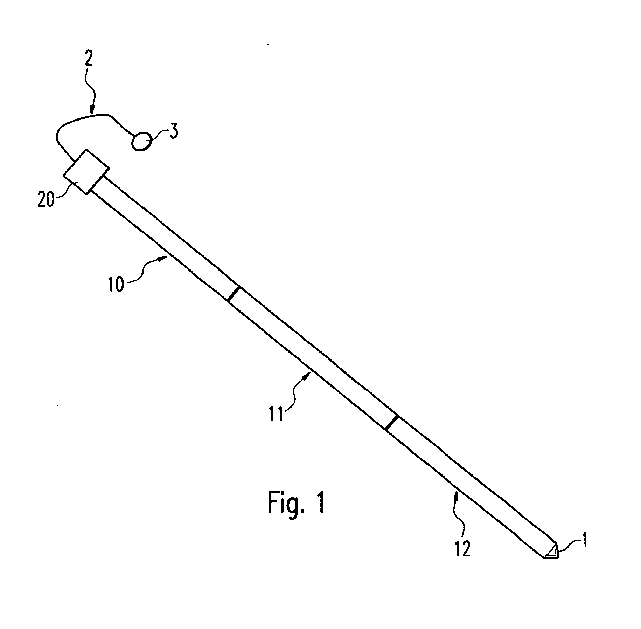

In Fig. 1 ist schematisch eine zusammengebaute Lawinensonde dargestellt. Drei rohrförmige Sondenteile 10 bis 12 sind miteinander steckverbunden. Ein erstes Sondenteil 12 und ein zweites Sondenteil 10 bilden den Anfang bzw. das Ende der zusammensteckbaren Sonde. Zum leichteren Einführen der Sonde in den Schnee ist am äußeren Ende des ersten Sondenteils 12 eine Spitze 1 angebracht. Am zweiten Sondenteil 10, das den Abschluss der Lawinensonde bildet, befindet sich eine Klemmvorrichtung 20. Ein Verbindungsseil 2 verläuft im Inneren der Sondenteile 10 bis 12. Das Verbindungsseil 2 ist mit dem einen Ende fest mit dem ersten Sondenteil 10 verbunden und kann über eine am anderen Ende angebrachte Spannvorrichtung 3 gespannt werden. Das gespannte Verbindungsseil läuft durch das Innere der Klemmvorrichtung 20 und wird in seinem gespannten Zustand mittels dieser fixiert.

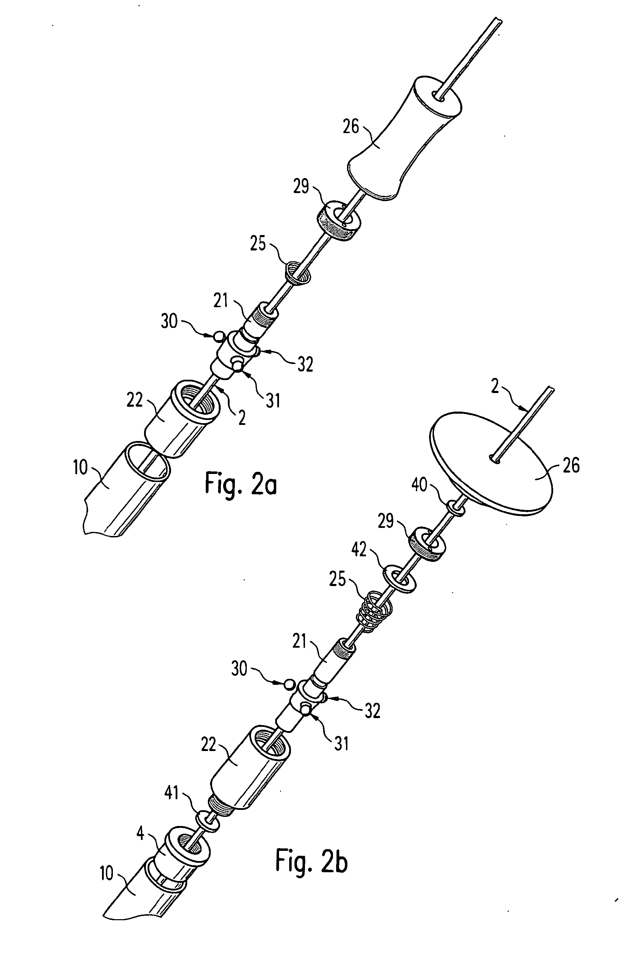

Eine Explosionsdarstellung einer ersten Ausführungsform der Klemmvorrichtung 20 (vgl. Fig. 1) wird in der Fig. 2a dargestellt. Diese Figur zeigt den der Klemmvorrichtung zugewandten Endabschnitt des zweiten Sondenteils 10, aus dem das Verbindungsseil 2 austritt. Das Verbindungsseil verläuft durch eine Innenhülse 21. Weitere hier dargestellte Bauelemente sind die Außenhülse 22, drei Kugeln 30 bis 32, die die Klemmelemente bilden, eine Kegelfeder 25, ein ringförmiger Verschluss 29 zum Verschließen der Außenhülse 22 sowie ein Auslösegriff 26.

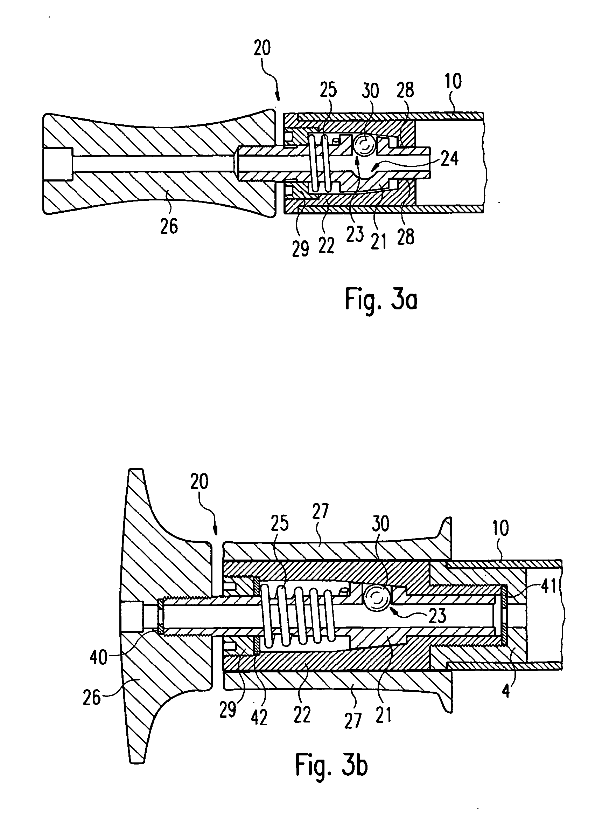

Anhand der zugehörigen Figur 3a, die einen Querschnitt entlang der Längsachse des zweiten Sondenteils durch die Klemmvorrichtung aus Fig. 2a darstellt, kann die Funktion und Lage der einzelnen Bauelemente der Klemmvorrichtung 20 besser erläutert werden. Die Klemmvorrichtung 20 befindet sich hier größtenteils im Inneren des zweiten Sondenteils 10. Die Außenhülse 22 ist innerseitig parallel zur Längsachse des zweiten Sondenteils 10 angeordnet und mit dem selbigen fest verklebt oder in dieses eingepresst. Im Inneren der Außenhülse ist wiederum parallel zur Längsachse des zweiten Sondenteils 10 die Innenhülse 21 angeordnet. Sie lässt sich durch ein Verschieben entlang dieser Längsachse aus einer Fixierposition, bei der die Innenhülse weiter ins Innere des zweiten Sondenteils 10 ragt, in eine Freigabeposition bringen. Der ringförmige Verschluss 29 ist in ein Gewinde der Außenhülse 22 eingeschraubt und umschließt die Innenhülse so, dass das äußere Ende der Außenhülse 22 verschlossen ist. Die Kegelfeder 25 greift so am Verschluss 29 der Außenhülse 22 und an der Innenhülse 21 an, dass die Federkraft die Innenhülse 21 in der Klemmposition hält. Um dieser Federkraft entgegenzuwirken und die Innenhülse aus der Klemmposition in die Freigabeposition zu bringen, ist am äußeren Ende der Innenhülse 21 ein Auslösegriff 26 vorgesehen. Zur einfachen Wartung der Klemmvorrichtung 20 kann der Verschluss 29 geöffnet werden.

Im Inneren der Innenhülse 21 sowie des Auslösegriffs 26 entlang der Längsachse verläuft ein Kanal, in dem sich das Verbindungsseil 2 (vgl. Fig. 2a) befindet. In einer Ausnehmung 23, die einen Abschnitt der Innenhülse 21 durchbricht, ist die Kugel 30 angeordnet. Diese Kugel 30 ist so dimensioniert, dass sie über die Ausnehmung 23 herausragt. Da die Außenhülse 22 derart konisch ausgebildet ist, dass sich in Richtung der Längsachse des zweiten Sondenteils 10 eine Rampe bildet, verjüngt sich der Innenraum der Außenhülse 22 derart, dass in der Klemmposition die Kugel 30 ausschließlich ins Innere der Innenhülse 21 ragt und so das Verbindungsseil (vgl. Fig. 2a) fixiert. In der Freigabeposition hat die Kugel mehr Spiel zwischen der Innenhülse und der Außenhülse 22, so dass die Kugel 30 nicht in den Innenraum der Innenhülse 21 gedrückt wird. Um ein Verklemmen der Innenhülse in der konisch zulaufenden Außenhülse 22 zu vermeiden, ist am inneren Ende der Außenhülse eine Stoppvorrichtung 28 vorgesehen. Eine Aussparung 24 in der Innenhülse gegenüber der Ausnehmung 23 hilft, das Seil in der Klemmposition besser zu fixieren.

Obwohl im Querschnitt aus Fig. 3a nur eine Kugel 30 dargestellt ist, sind, wie aus Fig. 2a hervorgeht, drei einander benachbarte Kugeln 30-32 mit entsprechenden Ausnehmungen 23 vorgesehen. Auf Grund der Verjüngung des Innenraums der Außenhülse 22 wird jede der drei Kugeln 30-32 in der Klemmposition in den Innenraum der Innenhülse 21 gedrückt. Das Verbindungsseil 2 ist also in der Klemmposition zwischen den drei Kugeln 30-32 eingeklemmt.

Figuren 2b und 3b zeigen eine zweite Ausführungsform der Klemmvorrichtung 20 aus Fig. 1. Analog zu den Figuren 2a und 3a zeigt die Fig. 2b eine Explosionsansicht und die Fig. 3b einen Querschnitt. Die Figuren umfassen ein Verbindungsseil 2, einen Auslösegriff 26, eine Kegelfeder 25, eine Innenhülse 21, drei Kugeln 30 bis 32 als Klemmelemente, einen Verschluss 29 und eine Außenhülse 22. Zusätzlich beinhaltet die zweite Ausführungsform der Klemmvorrichtung einen Adapter 4, der in das der Spitze 1 (vgl. Fig.1) abgewandte Ende des zweiten Sondenteils eingesetzt bzw. eingeklebt ist. Der Adapter 4 dient als Kopplungsstück zwischen dem zweiten Sondenteil 10 und der Klemmvorrichtung 20. Die Klemmvorrichtung ist abnehmbar in den Adapter 4 eingeschraubt.

Die zweite Ausführungsform der Klemmvorrichtung 20 weist des weiteren eine erste Dichtung 40, eine zweite Dichtung 41 und eine dritte Dichtung 42 auf. Diese sollen das Eindringen von Schnee und anderen Verschmutzungen in die Klemmvorrichtung 20 verhindern. Wie aus Fig. 3b ersichtlich, befindet sich die erste Dichtung am äußeren, dem zweiten Sondenteil abgewandten Ende der Innenhülse und ist derart ausgebildet, dass sie das Verbindungsseil 2 umschließt (vgl. Fig. 2b). Die zweite Dichtung 41 befindet sich am inneren Ende der Außenhülse 22 und umschließt ebenfalls das Verbindungsseil 2. Die dritte Dichtung 42 befindet sich am äußeren Ende der Außenhülse 22 und umschließt die Innenhülse 21. Da die Innenhülse 21 an dem dem Sondenteil 10 abgewandten Ende der Außenhülse 22 über diese herausragt, um den Auslösegriff 26 aufzunehmen, ist die dritte Dichtung 42 nötig, um eine Fuge zwischen Innenhülse 21 und Außenhülse 22 zu verschließen.

Bemerkenswert an der zweiten Ausführungsform ist noch, dass der Auslösegriff 26 schirmförmig ausgeprägt ist und an der Außenwand der Außenhülse 22 zur besseren Bedienbarkeit des Auslösegriffs 26 ein Haltegriff 27 vorgesehen ist.

### Bezugszeichenliste

- 1: Spitze
- 2: Verbindungsseil
- 3: Spannvorrichtung
- 4: Adapter
- 10-12: Sondenteil
- 20: Klemmvorrichtung
- 21: Innenhülse
- 22: Außenhülse
- 23: Ausnehmung
- 24: Aussparung
- 25: Kegelfeder
- 26: Auslösegriff
- 27: Haltegriff
- 28: Stoppvorrichtung
- 29: Verschluss
- 30-32: Kugel
- 40-42: Dichtung

## Patentansprüche

1. Lawinensonde umfassend:
- mindestens ein erstes und ein zweites rohrförmiges Sondenteil (10-12), die in Steckverbindung bringbar sind,
- ein im Inneren der Sondenteile (10-12) angeordnetes Verbindungsseil (2), dessen eines Ende mit dem ersten Sondenteil (12) und dessen anderes Ende mit einer Spannvorrichtung (3) in Verbindung steht, wobei das Verbindungsseil (2) mittels der Spannvorrichtung (3) spannbar und in einer am zweiten Sondenteil (10) angeordneten Klemmvorrichtung (20) so fixierbar ist, dass in einem gespannten Zustand alle Sondenteile (10-12) steckverbunden aneinander gehalten werden, und in einem ungespannten Zustand die Sondenteile (10-12) gegeneinander bewegbar sind,
**dadurch gekennzeichnet, dass**
die Klemmvorrichtung (20) eine Innenhülse (21) mit einem erste Kanal und eine Außenhülse (22) mit einem zweiten Kanal umfasst, in dem die Innenhülse (21) derart entlang einer Längsachse der Außenhülle (22) verschiebbar angeordnet ist, dass die Innenhülse aus einer Freigabeposition in eine Klemmposition bringbar ist, in der mindestens ein Klemmelement so in den ersten Kanal eingreift, dass das in dem ersten Kanal verlaufende Verbindungsseil (2) fixiert in der Klemmvorrichtung (20) gehalten wird.

2. Lawinensonde nach Anspruch 1,
**dadurch gekennzeichnet, dass**
die Innenhülse (21) mindestens eine Ausnehmung (23) umfasst, die den ersten mit dem zweiten Kanal verbindet und jeweils ein Klemmelement aufnimmt.

3. Lawinensonde nach einem der vorhergehenden Ansprüche, insbesondere nach Anspruch 2,
**dadurch gekennzeichnet, dass**
die Innenhülse (21) genau drei einander gegenüberliegende Klemmelemente umfasst.

4. Lawinensonde nach einem der vorhergehenden Ansprüche,
**dadurch gekennzeichnet, dass**
mindestens ein Klemmelement aus Kunststoff ausgebildet ist.

5. Lawinensonde nach einem der vorhergehenden Ansprüche,
**dadurch gekennzeichnet, dass**
das Klemmelement eine Kugel (30-32) umfasst.

6. Lawinensonde nach Anspruch 5,
**dadurch gekennzeichnet, dass**
der Durchmesser der Kugel (30-32) größer als die Wandstärke der Innenhülse (21) in unmittelbare Umgebung der jeweiligen Ausnehmung (23) ist, so dass die Kugel (30-32) zwischen der Außenhülse (22) und dem Verbindungsseil (2) einklemmbar ist.

7. Lawinensonde nach Anspruch 5 oder 6,
**dadurch gekennzeichnet, dass**
der Durchmesser der Kugel (30-32) größer oder gleich dem Durchmesser des Verbindungsseils (2) ist.

8. Lawinensonde nach einem der vorhergehenden Ansprüche,
**dadurch gekennzeichnet, dass**
eine Innenwand der Außenhülse (22) mindestens einen sich in Richtung auf das erste Sondenteil konisch verjüngenden Abschnitt umfasst, der in axialer Richtung des zweiten Kanals eine Rampe bildet, die beim Bewegen der Innenhülse (21) von der Freigabeposition in die Klemmposition mindestens ein Klemmelement in Richtung des Verbindungsseils (2) verspannt.

9. Lawinensonde nach Anspruch 8,
**dadurch gekennzeichnet, dass**
eine Außenwand der Innenhülse (21) mindestens einen konischen Abschnitt umfasst, der im Wesentlichen parallel zum konischen Abschnitt der Außenhülse (22) ausbildet ist, und in welchem das Klemmelement angeordnet ist.

10. Lawinensonde nach einem der vorhergehenden Ansprüche,
**dadurch gekennzeichnet, dass**
die Klemmvorrichtung (20) mindestens eine Dichtung (40-42) umfasst, welche den ersten und den zweiten Kanal gegen die Außenumgebung abdichtet.

11. Lawinensonde nach einem der vorhergehenden Ansprüche, insbesondere nach Anspruch 10,
**dadurch gekennzeichnet, dass**
die Klemmvorrichtung (20) mindestens eine Dichtung (40) an mindestens einem Ende der Innenhülse (21) und/oder mindestens eine Dichtung (41, 42) an mindestens einem Ende der Außenhülse (22) umfasst.

12. Lawinensonde nach einem der vorhergehenden Ansprüche,
**dadurch gekennzeichnet, dass**
die Klemmvorrichtung (20) ein Federelement (25) umfasst, das die Innenhülse (21) in die Klemmposition vorspannt.

13. Lawinensonde nach Anspruch 12,
**dadurch gekennzeichnet, dass**
das Federelement (25) eine Schrauben- oder Kegelfeder umfasst.

14. Lawinensonde nach einem der vorhergehenden Ansprüche,
**dadurch gekennzeichnet, dass**
ein äußeres dem zweiten Sondenteil (10) abgewandtes Ende der Innenhülse (21) einen Auslösegriff (26) umfasst, mittels dessen die Innenhülse (21) aus der Klernmposition in die Freigabeposition bringbar ist.

15. Lawinensonde nach Anspruch 14,
**dadurch gekennzeichnet, dass**
das zweite Sondenteil (10) einen Haltegriff (27) zur einfacheren Bedienung des Auslösegriffs (26) umfasst.

16. Lawinensonde nach einem der vorhergehenden Ansprüche,
**dadurch gekennzeichnet, dass**
die Außenhülse (22) eine Stoppvorrichtung (28) umfasst, die die Innenhülse zumindest im gespannten Zustand entgegen einer Spannwirkung des Verbindungsseils (2) hält.

17. Lawinensonde nach einem der vorhergehenden Ansprüche,
**dadurch gekennzeichnet, dass**
die Innenhülse (21) mindestens eine Aussparung (4) zur fixierenden Aufnahme des Verbindungsseil (2) in der Klemmposition umfasst.

18. Lawinensonde nach einem der vorhergehenden Ansprüche,
**dadurch gekennzeichnet, dass**
das zweite Sondenteil (10) einen Adapter (4) zur lösbaren Befestigung der Klemmvorrichtung umfasst.

## Claims

1. Avalanche probe, comprising:
- at least a first and a second tubular probe part (10-12) which can be brought into push-fitting connection,
- a connecting cord (2), arranged in the interior of the probe parts (10-12), one end of which is connected to the first probe part (12) and the other end of which is connected to a tensioning device (3), the connecting cord (2) being tensionable by means of the tensioning device (3) and being fixable in a clamping device (20) arranged on the second probe part (10) in such a way that, in a tensioned state, all the probe parts (10-12) are held in push-fitting connection with one another and, in a non-tensioned state, the probe parts (10-12) are movable with respect to one another,
**characterized in that**
the clamping device (20) comprises an inner sleeve (21) having a first channel and an outer sleeve (22) having a second channel in which the inner sleeve (21) is arranged so as to be displaceable along the longitudinal axis of the outer sleeve (22) in such a way that the inner sleeve is movable out of a disengaged position into a clamping position in which at least one clamping element engages in the first channel so that the connecting cord (2) running in the first channel is held fixedly in the clamping device (20).

2. Avalanche probe according to claim 1,
**characterized in that**
the inner sleeve (21) comprises at least one aperture (23) which connects the first channel to the second channel and receives a respective clamping element.

3. Avalanche probe according to any one of the preceding claims, especially according to claim 2,
**characterized in that**
the inner sleeve (21) comprises just three clamping elements located opposite one another.

4. Avalanche probe according to any one of the preceding claims,
**characterized in that**
at least one clamping element is made from plastics material.

5. Avalanche probe according to any one of the preceding claims,
**characterized in that**
the clamping element comprises a ball (30-32).

6. Avalanche probe according to claim 5,
**characterized in that**
the diameter of the ball (30-32) is greater than the wall thickness of the inner sleeve (21) in the immediate vicinity of the respective aperture (23), so that the ball (30-32) is clampable between the outer sleeve (22) and the connecting cord (2).

7. Avalanche probe according to claim 5 or 6,
**characterized in that**
the diameter of the ball (30-32) is greater than or equal to the diameter of the connecting cord (2).

8. Avalanche probe according to any one of the preceding claims,
**characterized in that**
the inner wall of the outer sleeve (22) comprises at least a portion tapering conically in the direction towards the first probe part, which portion forms in the axial direction of the second channel a ramp which, on movement of the inner sleeve (21) out of the disengaged position into the clamping position, biases at least one clamping element in the direction of the connecting cord (2).

9. Avalanche probe according to claim 8,
**characterized in that**
the outer wall of the inner sleeve (21) comprises at least one conical portion which is formed substantially parallel to the conical portion of the outer sleeve (22), and in which the clamping element is arranged.

10. Avalanche probe according to any one of the preceding claims,
**characterized in that**
the clamping device (20) comprises at least one seal (40-42) which seals the first and the second channels with respect to the external environment.

11. Avalanche probe according to any one of the preceding claims, especially according to claim 10,
**characterized in that**
the clamping device (20) comprises at least one seal (40) at at least one end of the inner sleeve (21) and/or at least one seal (41, 42) at at least one end of the outer sleeve (22).

12. Avalanche probe according to any one of the preceding claims,
**characterized in that**
the clamping device (20) comprises a spring element (25) which biases the inner sleeve (21) into the clamping position.

13. Avalanche probe according to claim 12,
**characterized in that**
the spring element (25) comprises a helical or conical spring.

14. Avalanche probe according to any one of the preceding claims,
**characterized in that**
the outer end of the inner sleeve (21) remote from the second probe part (10) comprises a release handle (26) by means of which the inner sleeve (21) is movable out of the clamping position into the disengaged position.

15. Avalanche probe according to claim 14,
**characterized in that**
the second probe part (10) comprises a handgrip (27) for easier operation of the release handle (26).

16. Avalanche probe according to any one of the preceding claims,
**characterized in that**
the outer sleeve (22) comprises a stop device (28) which holds the inner sleeve, at least in the tensioned state, against the tensioning action of the connecting cord (2).

17. Avalanche probe according to any one of the preceding claims,
**characterized in that**
the inner sleeve (21) comprises at least one recess (24) for fixedly seating the connecting cord (2) in the clamping position.

18. Avalanche probe according to any one of the preceding claims,
**characterized in that**
the second probe part (10) comprises an adapter (4) for detachable mounting of the clamping device.

## Revendications

1. Sonde d'avalanche comprenant :
- au moins une première partie et une deuxième partie de sonde tubulaire (10-12) qui peuvent être assemblées par enfichage,
- un câble de liaison (2), disposé à l'intérieur des parties de sonde (10-12), dont une extrémité est reliée à la première partie de sonde (12) et l'autre extrémité est reliée à un dispositif tendeur (3), le câble de liaison (2) pouvant être tendu au moyen du dispositif tendeur (3) et immobilisé dans un dispositif de blocage (20) disposé sur la deuxième partie de sonde (10) de telle manière que toutes les parties de sonde (10-12) peuvent être maintenues enfichées les unes dans les autres dans un état tendu et que les parties de sonde (10-12) peuvent être déplacées les unes par rapport aux autres dans un état non tendu,
**caractérisée en ce que** le dispositif de blocage (20) comprend une gaine interne (21) avec un premier conduit et une gaine externe (22) avec un deuxième conduit dans lequel la gaine interne (21) est disposée de manière à pouvoir se déplacer le long d'un axe longitudinal de la gaine externe (22) afin de faire passer la gaine interne d'une position de libération à une position bloquée dans laquelle au moins un élément de blocage s'engage dans le premier conduit de façon à maintenir le câble de liaison (2) passant dans le premier conduit immobilisé dans le dispositif de blocage (20).

2. Sonde d'avalanche selon la revendication 1, **caractérisée en ce que** la gaine interne (21) comprend au moins un creux (23) qui relie le premier conduit au deuxième et reçoit respectivement un élément de blocage.

3. Sonde d'avalanche selon l'une des revendications précédentes, en particulier selon la revendication 2, **caractérisée en ce que** la gaine interne (21) comprend exactement trois éléments de blocage opposés les uns aux autres.

4. Sonde d'avalanche selon l'une des revendications précédentes, **caractérisée en ce qu'**au moins un élément de blocage est en matière plastique.

5. Sonde d'avalanche selon l'une des revendications précédentes, **caractérisée en ce que** l'élément de blocage comprend une bille (30-32).

6. Sonde d'avalanche selon la revendication 5, **caractérisée en ce que** le diamètre de la bille (30-32) est supérieur à l'épaisseur de paroi de la gaine interne (21) au voisinage immédiat de chaque creux (23) afin que la bille (30-32) puisse se bloquer entre la gaine externe (22) et le câble de liaison (2).

7. Sonde d'avalanche selon la revendication 5 ou la revendication 6, **caractérisée en ce que** le diamètre de la bille (30-32) est égal ou supérieur au diamètre du câble de liaison (2).

8. Sonde d'avalanche selon l'une des revendications précédentes, **caractérisée en ce qu'**une paroi intérieure de la gaine externe (22) comprend au moins un segment qui présente une conicité en direction de la première partie de sonde et forme dans le sens axial du deuxième conduit une rampe qui lors du déplacement de la gaine interne (21) de la position de libération à la position de blocage contraint au moins un élément de blocage en direction du câble de liaison (2).

9. Sonde d'avalanche selon la revendication 8, **caractérisée en ce qu'**une paroi extérieure de la gaine interne (21) comprend au moins un segment conique qui est sensiblement parallèle au segment conique de la gaine externe (22) et dans lequel l'élément de blocage est disposé.

10. Sonde d'avalanche selon l'une des revendications précédentes, **caractérisée en ce que** le dispositif de blocage (20) comprend au moins un joint (40-42) assurant l'étanchéité du premier et du deuxième conduit vis-à-vis de l'environnement extérieur.

11. Sonde d'avalanche selon l'une des revendications précédentes, en particulier selon la revendication 10, **caractérisée en ce que** le dispositif de blocage (20) comprend au moins un joint (40) à au moins une extrémité de la gaine interne (21) et/ou au moins un joint (41, 42) à au moins une extrémité de la gaine externe (22).

12. Sonde d'avalanche selon l'une des revendications précédentes, **caractérisée en ce que** le dispositif de blocage (20) comprend un élément à ressort (25) qui précontraint la gaine interne (21) dans la position de blocage.

13. Sonde d'avalanche selon la revendication 12, **caractérisée en ce que** l'élément à ressort (25) comprend un ressort hélicoïdal ou conique.

14. Sonde d'avalanche selon l'une des revendications précédentes, **caractérisée en ce qu'**une extrémité extérieure de la gaine interne (21) opposée à la deuxième partie de sonde (10) comprend une poignée de déblocage (26) au moyen de laquelle la gaine interne (21) peut être amenée de la position de blocage dans la position de libération.

15. Sonde d'avalanche selon la revendication 14, **caractérisée en ce que** la deuxième partie de sonde (10) comprend un manche de préhension (27) destiné à faciliter le maniement de la poignée de déblocage (26).

16. Sonde d'avalanche selon l'une des revendications précédentes, **caractérisée en ce que** la gaine externe (22) comprend un dispositif d'arrêt (28) qui maintient la gaine interne au moins à l'état tendu contre une action de tension du câble de liaison (2).

17. Sonde d'avalanche selon l'une des revendications précédentes, **caractérisée en ce que** la gaine interne (21) comprend au moins un évidement (4) destiné à recevoir et immobiliser le câble de liaison (2) dans la position de blocage.

18. Sonde d'avalanche selon l'une des revendications précédentes, **caractérisée en ce que** la deuxième partie de sonde (10) comprend un adaptateur (4) servant à fixer le dispositif de blocage de manière déblocable.
